# EUROPÄISCHE PATENTSCHRIFT

(11) **EP 3 110 659 B1**
(45) Veröffentlichungstag und Bekanntmachung des Hinweises auf die Patenterteilung: **02.05.2018**
(21) Anmeldenummer: 14712593.4
(22) Anmeldetag: 27.02.2014
(51) Int. Cl.: B60P 7/08, F16B 5/02, F16B 11/00, F16B 37/04

(54) **BEFESTIGUNGSPLATTE**
MOUNTING PLATE
PLAQUE DE FIXATION

(43) Veröffentlichungstag der Anmeldung: 04.01.2017
(73) Patentinhaber: Rixen, Wolfgang, 42699 Solingen (DE); Pies, Gerrit, 42699 Solingen (DE)
(72) Erfinder: GABLER, Guido, 42651 Solingen (DE); SCHULZ, Carsten, 42655 Solingen (DE)
(74) Vertreter: BRP Renaud & Partner mbB Rechtsanwälte Patentanwälte Steuerberater
(86) Internationale Anmeldenummer: PCT/EP2014/000513
(87) Internationale Veröffentlichungsnummer: WO 2015/127946

(56) Entgegenhaltungen:
- EP-A1- 2 474 444
- DE-A1-102007 056 471
- DE-A1-102011 079 334
- DE-A1-102012 204 732
- US-A- 4 838 605

## Beschreibung

Die Erfindung betrifft eine Befestigungsplatte mit zusammengefügten Profilstäben, die im fertig montierten Zustand an mindestens einer Außenfläche Befestigungsausklinkungen aufweisen.

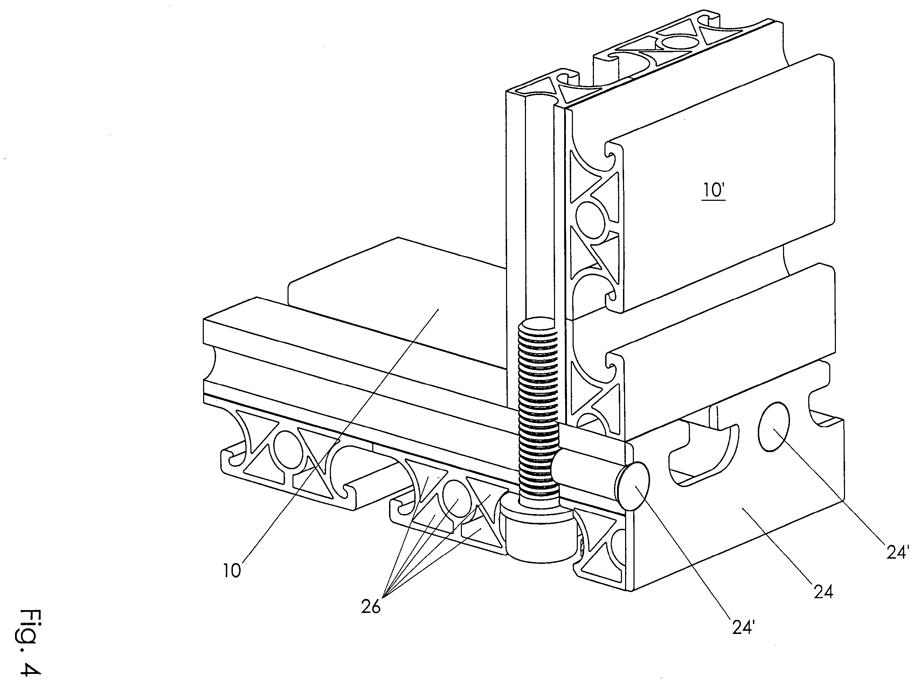

Eine derartige Befestigungsplatte ist aus der DE 41 24 157 C2 bekannt. Die dort beschriebene Modulplatte bzw. Träger dient der Verwendung bei Maschinenaufbauten und besteht aus mindestens zwei Profilelementen. Diese Profilelemente weisen an den Querschnittsseiten jeweils wenigstens einen sich in Längsrichtung der Profilelemente erstreckenden schwalbenschwanzförmigen Vorsprung auf. Gemäß Fig.4 enthält ein Profilelement mindestens zwei Vorsprünge, die nebeneinander angeordnet sind. Die dazwischen liegende Vertiefung ist die oben genannte Befestigungsausklinkung. Diese Ausklinkung ist selbstverständlich ebenfalls im Querschnitt schwalbenschwanzförmig ausgebildet.

Somit weisen mindestens zwei Profile im zusammengebauten Zustand an beiden großen Flächen Befestigungsausklinkungen auf.

Laut der oben genannten Schrift dient die Erfindung dazu, eine Modulplatte bzw. einen Träger zur Verfügung zu stellen, welcher in den unterschiedlichsten Größen, insbesondere auch Öffnungen, Ausnehmungen usw. an den jeweiligen Anwendungsfall angepasst hergestellt werden kann.

Ein Zitat aus obiger Druckschrift, Spalte 1, Zeilen 53 bis 65 besagt: "Dabei besteht das erfindungsgemäße Element aus einer Vielzahl von Profilelementen, das heißt aus einer Vielzahl von Längen eines Profils, welches preiswert aus Aluminium bzw. aus einer Aluminiumlegierung durch Strangpressen hergestellt werden kann. Durch die Verbinder sind diese Profilelemente aneinander anschließend miteinander verbunden, wobei eine besondere Besonderheit der Verbinder darin besteht, das die von diesen Verbindern verwendeten Spannmittel, die bevorzugt Spannbolzen sind, zum Verbindung frei zugänglich bleiben".

Diese sogenannte Modulplatte ist daher sehr kompliziert aufgebaut und somit kosten- und arbeitsintensiv. Außerdem ist sie auch nicht allseitig biegesteif und auch relativ schwer, da die Profilelemente zumindest für eine gewisse Biegesteifigkeit quer zur Längsachse doch relativ starke Wandungen aufweisen müssen.

Des weiteren sind die Außenkonturen dieser Profilelemente sehr scharfkantig. Das kann zu Verletzungen des Bedienpersonals bei der Montage führen.

Eine weitere Modulplatte dieser Art ist aus der DE 10 2011 079 334 A1 bekannt. Der Erfindung liegt daher die Aufgabe zugrunde, eine Befestigungsplatte der eingangs genannten Art anzugeben, die mit technisch einfachen Mitteln eine allseits hohe Biegesteifigkeit bei gleichzeitig geringerem Gewicht aufweist und gefahrlos handhabbar ist.

Diese Aufgabe wird bei der Befestigungsplatte der eingangs genannten Art erfindungsgemäß dadurch gelöst, dass die Profilstäbe eine erste Lage und eine damit verbundene zweite Lage bilden und die Profilstäbe pro Lage an ihren Längsseiten aneinander anliegen, und bezüglich der beiden Lagen quer zueinander verlaufen.

Der Kern der Erfindung besteht darin, zwei Lagen von Profilstäben miteinander zu verbinden, wobei die Längsausdehnung der Profilstäbe der beiden Lagen quer zueinander verläuft, vorzugsweise rechtwinklig.

Aufgrund der sich kreuzenden Profilstäben der beiden Lagen ist die Befestigungsplatte in den beiden Hauptachsen sehr biegesteif, da je nach Biegebeaufschlagung, entweder die erste Lage oder die zweite Lage die Hauptbiegekräfte oder Biegemomente durch die Biegesteifigkeit der Profilstäbe hauptsächlich aufnimmt.

Des weiteren ist hier von großem Vorteil, dass diese Befestigungsplatten, bzw. deren beiden Lagen, aus identisch ausgebildeten Profilstäben bestehen. Dadurch ist die Herstellung äußerst kostengünstig. Ferner ist es nicht notwendig, bei dem Zusammenfügen der einzelnen Lagen aneinander und dann auch die beiden Lagen zusammen besondere Ausrichtsinstrumente zu verwenden.

An den Befestigungsausklinkungen können nunmehr jegliche Arten von Befestigungen beispielsweise für Werkzeuge oder zum Festzurren von Transportgütern in Land- und Luftfahrzeugen oder Schiffen Verwendung finden. Durch die Vielzahl der Befestigungsausklinkungen ist eine sehr große Variationsbreite der Befestigungsarten und auch Befestigungspunkte gegeben.

Außerdem ist bei den Befestigungsplatten eine äußerst hohe Nutengenauigkeit sowie genaue Ebenheit aufgrund der gekreuzten Profile der beiden Lagen vorhanden.

Gemäß einer besonders vorteilhaften Ausführungsform der Erfindung ist es möglich, dass die Befestigungsausklinkungen aufgrund der Querschnittsform zweier aneinander anliegender Profilstäbe gebildet werden. Dadurch wird die Erstellung der Befestigungsausklinkungen quasi bei der Herstellung der Befestigungsplatte sozusagen als "Nebenprodukt" mit ausgeführt.

Dabei ist es von Vorteil, wenn die Befestigungsausklinkungen hinterschnittene Nuten sind. Die hinterschnittenen Nuten sind von großem Vorteil und auch Bedeutung, da gerade für hinterschnittene Nuten eine Vielzahl von Befestigungsmöglichkeiten und -mittel, unter anderem Nutensteine und Hammerkopfschrauben, vorhanden sind. Somit ist jegliche Befestigungsmöglichkeit gegeben.

Gemäß einer vorteilhaften Weiterbildung der Erfindung ist es möglich, dass jede Lage auf der den Befestigungsausklinkungen entgegengesetzten Seite eine ebene Fläche aufspannt, welche miteinander verbunden sind. Aufgrund der großen ebenen Flächen, können diese Flächen sozusagen lückenfrei hergestellt werden.

Dabei ist es dann von ganz besonderem Vorteil, wenn die ebenen Flächen miteinander verklebt sind. Aufgrund der Verklebung kann die entsprechende Biegekraft oder die Biegekräfte noch besser aufgenommen werden, da sich die beiden miteinander verklebten Flächen innerhalb der zulässigen Lasten für die Befestigungsplatte nicht verschieben.

Die erfindungsgemäßen Befestigungsplatten können in einheitlichen und auch in unterschiedlichen Größenabmessungen als Rohmaterial in Rechteckform hergestellt werden. Sollten andere Konturen wünschenswert oder gar notwendig sein, so ist jederzeit ein entsprechendes Ablängen oder sogar Ausschneiden von bestimmten Bereichen möglich.

Nicht nur für die Grundformen sondern auch für die evtl. geschnittenen Formen ist es von Vorteil, wenn die Stirnseiten und/oder Seiten mit Abdeckungen versehbar sind.

Gemäß einer Weiterbildung der Erfindung ist es vorgesehen, dass mindestens eine weitere Befestigungsplatte an den Stirnseiten anschließbar ist. Dies ist besonders vorteilhaft, wenn eine Montagewand oder ein Montageboden mehrere sogenannte genormte Platten benötigt, um die gesamte freie Fläche, die für die Bodenplatte zur Verfügung steht, ausnutzen zu können.

Ebenfalls ist es vorgesehen, dass die mindestens eine weitere Befestigungsplatte in der gleichen Ebene oder senkrecht zur Befestigungsplatte anbringbar ist. Dadurch ist es beispielsweise möglich, die oben angegebenen Einbaubeispiele noch besser durchführen zu können.

Aus Gewichtsgründen ist es vorteilhaft, wenn die Profilstäbe Hohlprofile sind, die mindestens eine Kammer aufweisen.

Zur Aufnahme von Verbindungsbolzen ist es dann von Vorteil, wenn mehrere Kammern vorhanden sind und die mindestens eine der Kammern oder eine der mehreren Kammern im Durchmesser kreisförmig ausgebildet ist. Die im Querschnitt kreisförmigen Kammern, können dann mit sogenannten selbstschneidenden Schrauben sehr gut ergriffen werden.

Es ist sicherlich eine Vielzahl von Materialien für die Herstellung der Befestigungsplatten denkbar. Als besonders vorteilhaft hat sich allerdings erwiesen, wenn sie aus Metall, Kunststoff, Holz oder einer beliebigen Kombination daraus bestehen.

Insbesondere die Profilstangen aus Metall und/oder Kunststoff sind vorteilhaft durch mittels Strangpressen herstellbar.

Weitere Merkmale und Vorteile der Erfindung ergeben sich aus der folgenden Beschreibung sowie aus den Figuren, auf die Bezug genommen wird. Es zeigen:
- Fig.1: eine perspektivische Darstellung einer Befestigungsplatte;
- Fig.2: eine der Fig.1 ähnliche Perspektivansicht einer an den Seitenrändern mit Abdeckungen versehenen Befestigungsplatte;
- Fig.3: eine Perspektivansicht einer Befestigungsplatte, die mit einer weiteren Befestigungsplatte befestigt ist, jeweils mit Abdeckungen; und
- Fig.4: eine perspektivische Schnittteilansicht der in Fig.3 gezeigten verbundenen Befestigungsplatten.

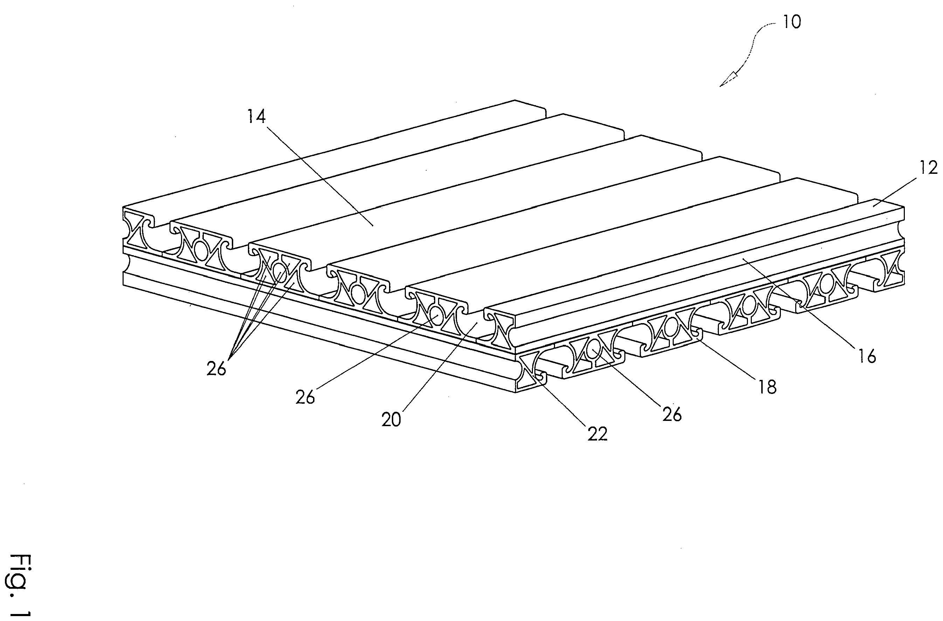

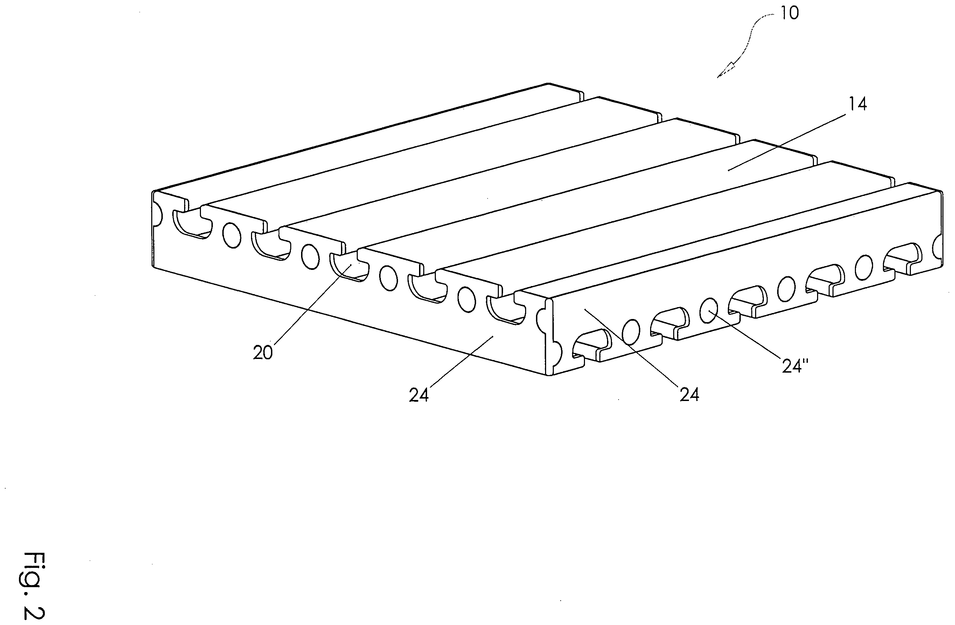

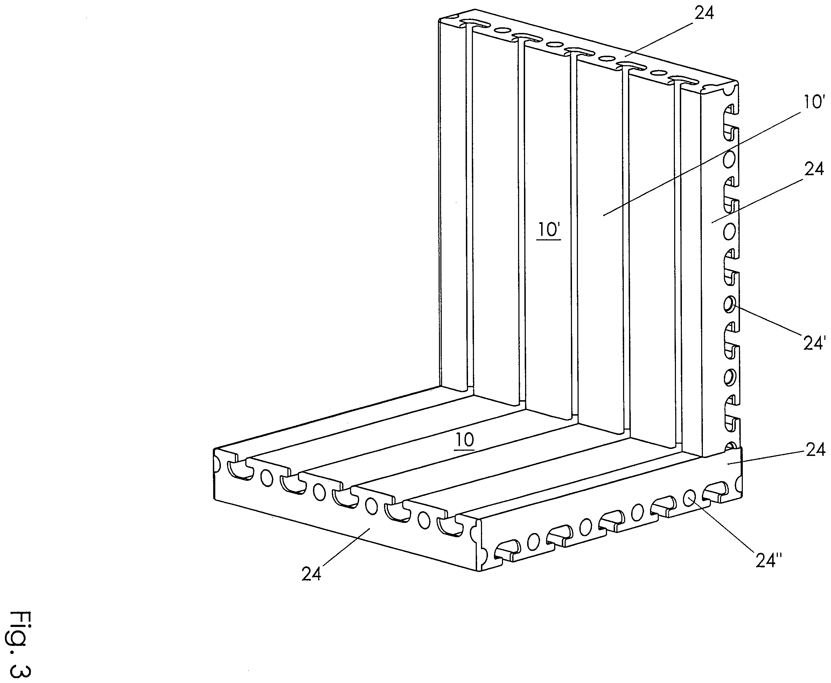

Anhand der Figuren 1 bis 4 werden nunmehr mehrere Ausführungsbeispiele einer Befestigungsplatte 10 und 10', beschrieben. Dabei bedeuten gleiche Bezugsziffern gleiche Merkmale, soweit nichts anderes ausgesagt ist.

In allen vier Figuren ist die Befestigungsplatte 10 bzw. die weiteren Befestigungsplatten 10' jeweils aus identischen Profilstäben 12 zusammengesetzt. Hier ist eine erste Lage 16 von Profilstäben 12 mit einer zweiten Lage 18 der Profilstäbe 12 in zwei Schichten miteinander verbunden. Dabei ist die Ausrichtung der Befestigungsausklinkungen 20, die hier als Beispiel aus hinterschnittenen Nuten 20 bestehen, der beiden Lagen derart gegeneinander ausgerichtet, dass sie quer zueinander verlaufen. Das heißt, die jeweiligen Profilstäbe 12 der ersten und zweiten Lagen 16 und 18 sind in diesem Ausführungsbeispiel senkrecht zueinander ausgerichtet.

Wie sich aus allen Figuren ergibt, bestehen die ersten und zweiten Lagen 16 und 18 jeweils aus identischen Profilstäben 12, deren Querschnittsformen derart ausgewählt sind, dass einander benachbarte Profilstäbe 12 jeweils eine hinterschnittene Nut 20 bilden.

Des weiteren sind die Profilstäbe 12 derart ausgeformt, dass jede Lage 16 und 18 auf der den Befestigungsausklinkungen bzw. Nuten 20 entgegengesetzten Seite eine ebene Fläche 22 aufspannt und die Flächen 22 miteinander verbunden sind.

Es gibt sicherlich eine Vielzahl von Möglichkeiten, diese beiden Lagen miteinander zu verbinden. Beispielsweise mit geeigneten Schraubverbindungen und ähnliches.

Bei den gezeigten Ausführungsbeispielen ist allerdings die Verbindung durch Verkleben hergestellt.

Diese Verklebung stellt sicher, dass bei einer Belastung der einen Lage 16 oder 18 die entsprechende auf die Befestigungsplatte 10 einwirkende Kraft auch noch auf die entgegengesetzte Lage 18 oder 16 übertragen wird. Dadurch wird die Kraftaufnahme wesentlich erhöht und zudem auch noch eine in mehreren Richtungen wirkende Biegesteifigkeit erzielt.

Nach der Verklebung können dann die Befestigungsplatten 10 mit weiteren Befestigungsplatten 10' sowohl an den Stirnseiten in ebener Art und Weise als auch an den Stirnseiten in senkrechter Art und Weise miteinander verbunden werden.

Damit keine Verletzungsgefahr bei der Handhabung der Befestigungsplatten 10 und 10' auftritt, sind die jeweiligen Stirnflächen der Befestigungsplatte 10 mit Abdeckungen 24 versehen.

Diese Abdeckungen 24 sind so geformt, dass sie die Nuten 20 freilassen und auch noch ein zentrales Loch 24' pro Profilstab 12 aufweisen. Dieses Loch 24' fluchtet mit einer in den Profilstäben 12 vorhandenen Kammer 26.

Die hier gezeigten Profilstäbe 12 sind sämtlich als Hohlprofile ausgeführt und weisen mindestens eine Kammer 26 auf.

Damit die oben angegebene Befestigungsschraube, zum Beispiel eine selbstschneidende Schraube, auch einfach verwandt werden kann, ist gemäß eines weiteren Ausführungsbeispiels jeder Profilstab mit mehreren Kammern 26 ausgebildet.

Dabei befindet sich dann die vorteilhafterweise kreisförmig ausgebildete Kammer 26 zentral in etwa in Richtung der Längs-Mittelachse des Profilstabes 12.

Wenn eine mit einer Abdeckung 24 versehene Stirnfläche der Befestigungsplatte 10 nicht für eine weitere Befestigung benötigt wird, so weißt die Abdeckung 24 in den Löchern 24' eingesteckte Stopfen 24' auf, um lediglich die Öffnung für die Nuten 20 freizulassen.

Als Material für die Befestigungsplatten 10 kann je nach Einsatzart bzw. Belastungsgröße als Material Metall, Kunststoff, Holz oder eine beliebige Kombination daraus verwandt werden.

Die gezeigten Befestigungsplatten 10 bestehen aus stranggepressten Profilstäben 12 aus Metall, wobei die optional verwendbaren Abdeckungen 24 und auch die dazugehörigen Stopfen 24' vorteilhafterweise aus Kunststoff bestehen können.

Die erfindungsgemäße Befestigungsplatte 10 ist vielseitig einsetzbar. So können einerseits damit ganze Wände einer Werkstatt damit ausgekleidet werden, um die Werkzeuge an entsprechenden in den Nuten 20 angeordneten Halterungen aufzuhängen.

Es ist selbstverständlich auch möglich, die Befestigungsplatten 10 in einem Mini- oder Großtransporter anzubringen, um entweder eine fahrbare Werkstatt damit zu errichten, oder um als Bodenbelag zu dienen, an dem dann entsprechendes Warengut festgezurrt werden kann. Selbstverständlich ist dies auch in Luftfahrzeugen und Schiffen möglich.

Der besondere Vorteil dieser Befestigungsplatten 10 liegt darin, dass sie eine sehr hohe Biegesteifigkeit in mehreren Richtungen entlang der Ränder aufweist und gleichzeitig, verglichen mit Vollmaterial, aufgrund der mit Hohlräumen bzw. Kammern 26 versehenen Profilstäbe 12 sehr viel Gewicht einsparen.

Außerdem ist bei den Befestigungsplatten eine äußerst hohe Nutengenauigkeit sowie genaue Ebenheit aufgrund der gekreuzten Profile der beiden Lagen vorhanden.

Weitere Kosteneinsparungen ergeben sich dadurch, dass die Profilstäbe 12 alle identisch sind. Dadurch ist es möglich, diese Profilstäbe 12 einfach zu handhaben, und vor allen Dingen benötigt man nicht unnötig Stauraum für unterschiedliche Ausführungsarten von Profilstäben 12.

### Bezugszeichenliste:

- 10: Befestigungsplatte
- 10': weitere Befestigungsplatte
- 12: Profilstab
- 14: Befestigungsaussparung
- 16: erste Lage
- 18: zweite Lage
- 20: Befestigungsausklinkung/hinterschnittene Nut
- 22: Fläche
- 24: Abdeckung
- 24': Loch
- 24": Stopfen
- 26: Kammer

## Patentansprüche

1. Befestigungsplatte (10) mit zusammengefügten Profilstäben (12), die im fertig montierten Zustand an mindestens einer Außenfläche (14) Befestigungsausklinkungen (20) aufweisen, **dadurch gekennzeichnet, dass** die Profilstäbe (12) eine erste Lage (16) und eine damit verbundene zweite Lage (18) bilden, und die Profilstäbe (12) pro Lage (16,18) an ihren Längsseiten aneinander anliegen und bezüglich der beiden Lagen (16,18) quer zueinander verlaufen.

2. Befestigungsplatte (10) nach Anspruch 1, **dadurch gekennzeichnet, dass** jede Befestigungsausklinkung (20) aufgrund der Querschnittsform zweier aneinander anliegenden Profilstäbe (12) gebildet wird.

3. Befestigungsplatte (10) nach Anspruch 1 oder 2, **dadurch gekennzeichnet, dass** die Befestigungsausklinkungen hinterschnittene Nuten (20) sind.

4. Befestigungsplatte (10) nach einem der Ansprüche 1 bis 3, **dadurch gekennzeichnet, dass** jede Lage (16,18) auf der den Befestigungsausklinkungen (20) entgegengesetzten Seite eine ebene Fläche (22) aufspannt, welche miteinander verbunden sind.

5. Befestigungsplatte (10) nach Anspruch 4, **dadurch gekennzeichnet, dass** die ebenen Flächen (22) miteinander verklebt sind.

6. Befestigungsplatte (10) nach einem der Ansprüche 1 bis 5, **dadurch gekennzeichnet, dass** die Stirnseiten und/oder Seiten mit Abdeckungen (24) versehbar sind.

7. Befestigungsplatte (10) nach einem der Ansprüche 1 bis 6, **dadurch gekennzeichnet, dass** mindestens eine weitere Befestigungsplatte (10') an den Stirnseiten anschließbar ist.

8. Befestigungsplatte (10) nach Anspruch 7, **dadurch gekennzeichnet, dass** die mindestens eine weitere Befestigungsplatte (10') in der gleichen Ebene oder senkrecht zur Befestigungsplatte (10) anbringbar ist.

9. Befestigungsplatte (10) nach einem der Ansprüche 1 bis 8, **dadurch gekennzeichnet, dass** die Profilstäbe (12) Hohlprofile sind, die mindestens eine Kammer (26) aufweisen.

10. Befestigungsplatte (10) nach Anspruch 9, **dadurch gekennzeichnet, dass** mehrere Kammern (26) vorhanden sind und dass die mindestens eine der Kammern (26) oder eine der mehreren Kammern (26) im Durchmesser kreisförmig ausgebildet ist.

11. Befestigungsplatte (10) nach einem der Ansprüche 1 bis 10, **dadurch gekennzeichnet,** das sie aus Metall, Kunststoff, Holz oder einer beliebigen Kombination daraus besteht.

12. Befestigungsplatte (10) nach einem der Ansprüche 1 bis 11, **dadurch gekennzeichnet, dass** die Profile (12) mittels Strangpressen hergestellt sind.

## Claims

1. Mounting plate (10) with joined together profile bars (12), which in the finally mounted state on at least one outer surface (14) comprise fastening notches (20), **characterised in that** the profile bars (12) form a first layer (16) and a connected second layer (18), and the profile bars (12) of each layer (16, 18) are adjacent to one another on their longitudinal sides and are perpendicular to one another with respect to the two layers (16, 18).

2. Mounting plate (10) according to claim 1, **characterised in that** each fastening notch (20) is formed on the basis of the cross-sectional form of two adjacent contacting profile bars (12).

3. Mounting plate (10) according to claim 1 or 2, **characterised in that** the fastening notches are undercut grooves (20).

4. Mounting plate (10) according to any of claims 1 to 3, **characterised in that** on the side opposite the fastening notches (20) each layer (16, 18) has a flat surface (22) on which they are joined together.

5. Mounting plate (10) according to claim 4, **characterised in that** the flat surfaces (22) are adhered to one another.

6. Mounting plate (10) according to any of claims 1 to 5, **characterised in that** the end faces and/or sides can be provided with covers (24).

7. Mounting plate (10) according to any of claims 1 to 6, **characterised in that** at least one additional mounting plate (10') can be joined to the end faces.

8. Mounting plate (10) according to claim 7, **characterised in that** the at least one additional mounting plate (10') can be attached in the same plane or perpendicular to the mounting plate (10).

9. Mounting plate (10) according to any of claims 1 to 8, **characterised in that** the profiled bars (12) are hollow profiles which comprise at least one chamber (26).

10. Mounting plate (10) according to claim 9, **characterised in that** a plurality of chambers (26) are provided and **in that** at least one of the chambers (26) or one of the plurality of chambers (26) is designed to be circular in diameter.

11. Mounting plate (10) according to any of claims 1 to 10, **characterised in that** it is made of metal, plastic, wood or any combination of the latter.

12. Mounting plate (10) according to any of claims 1 to 11, **characterised in that** the profiled bars (12) are produced by means of extrusion.

## Revendications

1. Plaque de fixation (10) avec des barres profilées assemblées (12) qui présentent à l'état définitivement monté sur au moins une surface extérieure (14) des encoches de fixation (20), **caractérisée en ce que** les barres profilées (12) forment une première couche (16) et une seconde couche (18) raccordée à celle-ci, et les barres profilées (12) reposent les unes contre les autres par couche (16, 18) sur leurs côtés longitudinaux et s'étendent par rapport aux deux couches (16, 18) transversalement les unes aux autres.

2. Plaque de fixation (10) selon la revendication 1, **caractérisée en ce que** chaque encoche de fixation (20) est formée en raison de la forme de section transversale de deux barres profilées (12) reposant l'une contre l'autre.

3. Plaque de fixation (10) selon la revendication 1 ou 2, **caractérisée en ce que** les encoches de fixation sont des rainures contre-dépouillées (20).

4. Plaque de fixation (10) selon l'une quelconque des revendications 1 à 3, **caractérisée en ce que** chaque couche (16, 18) serre sur le côté opposé aux encoches de fixation (20) une surface plane (22) qui sont raccordées entre elles.

5. Plaque de fixation (10) selon la revendication 4, **caractérisée en ce que** les surfaces planes (22) sont collées les unes aux autres.

6. Plaque de fixation (10) selon l'une quelconque des revendications 1 à 5, **caractérisée en ce que** les côtés avant et/ou côtés peuvent être pourvus de recouvrements (24).

7. Plaque de fixation (10) selon l'une quelconque des revendications 1 à 6, **caractérisée en ce qu'**au moins une autre plaque de fixation (10') peut être reliée aux côtés avant.

8. Plaque de fixation (10) selon la revendication 7, **caractérisée en ce que** l'au moins une autre plaque de fixation (10') peut être agencée dans le même plan ou perpendiculairement à la plaque de fixation (10).

9. Plaque de fixation (10) selon l'une quelconque des revendications 1 à 8, **caractérisée en ce que** les barres profilées (12) sont des profilés creux qui présentent au moins une chambre (26).

10. Plaque de fixation (10) selon la revendication 9, **caractérisée en ce que** plusieurs chambres (26) sont présentes et **en ce que** le diamètre de l'au moins une des chambres (26) ou une des plusieurs chambres (26) est réalisé de manière circulaire.

11. Plaque de fixation (10) selon l'une quelconque des revendications 1 à 10, **caractérisée en ce qu'**elle se compose de métal, de matière plastique, de bois ou d'une combinaison quelconque de ceux-ci.

12. Plaque de fixation (10) selon l'une quelconque des revendications 1 à 11, **caractérisée en ce que** les profilés (12) sont fabriqués par extrusion.
